# EUROPEAN PATENT APPLICATION

(11) **EP 4 759 135 A1**
(43) Date of publication of application: **17.06.2026**
(21) Application number: 25176501.2
(22) Date of filing: 14.05.2025
(51) Int. Cl.: A01K 5/02, A01K 7/02

(54) **INTELLIGENT CONTROL METHOD, APPARATUS AND SYSTEM FOR INTEGRATED ANIMAL FEEDING AND WATERING**

(30) Priority: 13.12.2024 CN 202411838255
(71) Applicant: Beijing Etag Technology Company., Ltd., Haidian District Beijing 100083 (CN)
(72) Inventor: ZHOU, Xingfu, Beijing, 100083 (CN); REN, Jiping, Beijing, 100083 (CN); PANG, Chao, Beijing, 100083 (CN); HU, Dongge, Beijing, 100083 (CN); DONG, Jiemin, Beijing, 100083 (CN); DING, Shijie, Beijing, 100083 (CN); LI, Jingkuo, Beijing, 100083 (CN); ZHOU, Jingyi, Beijing, 100083 (CN)
(74) Representative: Dilg, Haeusler, Schindelmann Patentanwaltsgesellschaft mbH

(57) **Abstract**

Embodiments of the present disclosure provide an intelligent control method, apparatus and system for integrated animal feeding and watering. The method includes: upon receiving a startup signal of a watering-feeding means, controlling a water supply module to supply water and a feed dispensing module to dispense feed based on a preset watering-feeding algorithm; when using an individual watering-feeding means, upon detection of a feeding period, controlling operations of the water supply module and the feed dispensing module based on a first set rule; and upon detection of a watering period, controlling operations of the water supply module and the feed dispensing module based on a second set rule; and when using a group watering-feeding means, upon detection of the watering-feeding period, controlling operations of the water supply module and the feed dispensing module based on a third set rule; and upon detection of the watering period, controlling operations of the water supply module and the feed dispensing module based on a fourth set rule, thus realizing integrated feeding and watering, and realizing intelligent switching between the feeding and the watering based on the algorithm relying on sensing signals, thereby not only reducing costs of construction, operation and maintenance of a farm, but also reducing wastes of the feed and water.

## Description

### TECHNICAL FIELD

The present disclosure relates to the technical field of feeding control, and specifically to an intelligent control method, apparatus and system for integrated animal feeding and watering.

### BACKGROUND ART

At present, large-scale breeding of commercial animals has been in a dominant position in the industry. Liquid feeding is a development trend in the future. Both water and feed are crucial daily consumable production materials and are also fundamental resources for survival and growth of commercial animals. In order to fulfill daily production, different eating and watering areas are typically specially designed in a pen of a livestock farm, two distinct sets of apparatuses for eating and watering are installed and maintained, and the eating and watering apparatuses are separately controlled to operate, so as to meet animals' eating and watering needs. However, these apparatuses incur high construction, operation and maintenance costs while causing wastes of feed and water.

### SUMMARY

Embodiments of the present disclosure aim at providing an intelligent control method, apparatus and system for integrated animal feeding and watering, so as to solve the problems of high construction, operation and maintenance costs of existing apparatuses, along with wastes of feed and water.

In the first aspect, embodiments of the present disclosure provide an intelligent control method for integrated animal feeding and watering, including:
upon receiving a startup signal of a watering-feeding means, controlling a water supply module to supply water and a feed dispensing module to dispense feed, based on a preset watering-feeding algorithm;
when using an individual watering-feeding means, upon detection of a feeding period, acquiring a first sensing signal, and controlling operations of the water supply module and the feed dispensing module based on a first set rule; and upon detection of a watering period, acquiring a second sensing signal, and controlling operations of the water supply module and the feed dispensing module based on a second set rule; and
when using a group watering-feeding means, upon detection of the feeding period, acquiring a third sensing signal, and controlling operations of the water supply module and the feed dispensing module based on a third set rule; and upon detection of the watering period, acquiring a fourth sensing signal, and controlling operations of the water supply module and the feed dispensing module based on a fourth set rule.

In the above implementation process, upon receiving the startup signal of the watering-feeding means, the water supply module is controlled to supply water and the feed dispensing module is controlled to dispense the feed based on the preset watering-feeding algorithm; when the individual watering-feeding means is used, upon detection of the feeding period, operations of the water supply module and the feed dispensing module are controlled based on the first set rule, and upon detection of the watering period, operations of the water supply module and the feed dispensing module are controlled based on the second set rule; when the group watering-feeding means is used, upon detection of the feeding period, operations of the water supply module and the feed dispensing module are controlled based on the third set rule, and upon detection of the watering period, operations of the water supply module and the feed dispensing module are controlled based on the fourth set rule, thus realizing integrated feeding and watering, and realizing intelligent switching between the feeding and the watering based on the algorithm relying on the sensing signals, thereby not only reducing costs of construction, operation and maintenance of a farm, but also reducing wastes of the feed and water.

Further, the step of upon receiving a startup signal of a watering-feeding means, controlling a water supply module to supply water and a feed dispensing module to dispense feed based on a preset watering-feeding algorithm, includes:
upon receiving the startup signal of the watering-feeding means, setting a set duration as one watering-feeding cycle, where the watering-feeding cycle includes several feeding periods and several watering periods;
setting a starting time point of each watering-feeding period and each watering period;
upon detection of the watering-feeding period, controlling the water supply module and the feed dispensing module to operate; and
upon detection of the watering period, controlling the water supply module to perform control.

In the above implementation process, intelligent control of and switching between the feeding and the watering are realized on the basis of the algorithm, thus ensuring feeding efficiency and avoiding wastes.

Further, after the step of setting a set duration as one watering-feeding cycle, the method further includes:
setting the watering-feeding periods and the watering periods alternately; or
setting two watering periods between any two watering-feeding periods.

In the above implementation process, the watering-feeding periods and the watering periods are reasonably set, thus enhancing a feeding effect.

Further, the step of when using an individual watering-feeding means, upon detection of a feeding period, acquiring a first sensing signal, and controlling operations of the water supply module and the feed dispensing module based on a first set rule; and upon detection of a watering period, acquiring a second sensing signal, and controlling operations of the water supply module and the feed dispensing module based on a second set rule, includes:
when using the individual watering-feeding means, upon detection of the feeding period, acquiring resistance signals of a first grounding sensor and a first height sensor;
controlling, if resistance variation of the first grounding sensor and the first height sensor reaches a first set threshold, both the water supply module and the feed dispensing module to stop operation;
upon detection of the watering period, acquiring resistance signals of the first grounding sensor and a second height sensor; and
controlling, if resistance variation of the first grounding sensor and the second height sensor reaches a second set threshold, the water supply module to stop operation.

In the above implementation process, intelligent switching between and control of the feeding and the watering of the individual watering-feeding means are realized on the basis of the algorithm, thus reducing wastes of the feed and water.

Further, the step of when using a group watering-feeding means, upon detection of the feeding period, acquiring a third sensing signal, and controlling operations of the water supply module and the feed dispensing module based on a third set rule; and upon detection of the watering period, acquiring a fourth sensing signal, and controlling operations of the water supply module and the feed dispensing module based on a fourth set rule includes:
when using the group watering-feeding means, upon detection of the feeding period, acquiring resistance signals of a second grounding sensor, a third grounding sensor, a third height sensor and a fourth height sensor;
controlling, if resistance variation of the second grounding sensor and the third height sensor reaches a third set threshold, or if resistance variation of the third grounding sensor and the fourth height sensor reaches the third set threshold, both the water supply module and the feed dispensing module to stop operation;
upon detection of the watering period, acquiring resistance signals of the second grounding sensor, the third grounding sensor, a fifth height sensor and a sixth height sensor; and
controlling, if resistance variation of the second grounding sensor and the fifth height sensor reaches a fourth set threshold, or if resistance variation of the third grounding sensor and the sixth height sensor reaches a fourth set threshold, the water supply module to stop operation.

In the above implementation process, intelligent switching between and control of the feeding and the watering of the group watering-feeding means are realized on the basis of the algorithm, thus reducing wastes of the feed and water.

In the second aspect, embodiments of the present disclosure provide an intelligent control apparatus for integrated animal feeding and watering, including:
a startup control module, configured to, upon receiving a startup signal of a watering-feeding means, control a water supply module to supply water and a feed dispensing module to dispense feed based on a preset watering-feeding algorithm;
an individual control module, configured to, when using an individual watering-feeding means, upon detection of a feeding period, acquire a first sensing signal, and control operations of the water supply module and the feed dispensing module based on a first set rule, and upon detection of a watering period, acquire a second sensing signal, and control operations of the water supply module and the feed dispensing module based on a second set rule; and
a group control module, configured to, when using a group watering-feeding means, upon detection of the feeding period, acquire a third sensing signal, and control operations of the water supply module and the feed dispensing module based on a third set rule; and upon detection of the watering period, acquire a fourth sensing signal, and control operations of the water supply module and the feed dispensing module based on a fourth set rule.

In the third aspect, embodiments of the present disclosure provide an intelligent control system for integrated animal feeding and watering, including: a cloud service platform, an individual watering-feeding means and a group watering-feeding means, where the cloud service platform includes the above intelligent control apparatus for integrated animal feeding and watering; the individual watering-feeding means includes an individual control module, an individual feed dispensing module, an individual water supply module, an individual sensing module and an individual plastic trough; and the group watering-feeding means includes a group control module, a group feed dispensing module, a group water supply module, a group sensing module and a group plastic trough, where the cloud service platform is connected to the individual control module and the group control module;
the individual feed dispensing module and the individual water supply module are respectively connected to the individual control module, the individual feed dispensing module and the individual water supply module are respectively connected to the individual plastic trough, and the individual sensing module is provided on the individual plastic trough; and
the group feed dispensing module and the group water supply module are respectively connected to the group control module, the group feed dispensing module and the group water supply module are respectively connected to the group plastic trough, and the group sensing module is provided on the group plastic trough.

Further, the individual sensing module includes a first grounding sensor, a first height sensor and a second height sensor, where the first height sensor is provided in a position lower than a position where the second height sensor is provided; and
the group sensing module includes a first sensor set and a second sensor set, where the first sensor set includes a second grounding sensor, a third height sensor, and a fourth height sensor; and the second sensor set includes a second grounding sensor, a fifth height sensor and a sixth height sensor, where the third height sensor is provided in a position lower than a position where the fourth height sensor is provided, and the fifth height sensor is provided in a position lower than a position where the sixth height sensor is provided.

In the fourth aspect, embodiments of the present disclosure provide an electronic device, including:
a processor, a memory and an internal bus, where the processor is connected to the memory through the internal bus, the memory stores computer-readable instructions, and the computer-readable instructions are configured to, when executed by the processor, implement the above intelligent control method for integrated animal feeding and watering.

In the fifth aspect, embodiments of the present disclosure provide a computer-readable storage medium, storing a computer program, where the computer program, when executed by a server, implements the above intelligent control method for integrated animal feeding and water.

### BRIEF DESCRIPTION OF DRAWINGS

In order to more clearly illustrate technical solutions of embodiments of the present disclosure, drawings that need to be used in the embodiments of the present disclosure will be briefly introduced below. It should be understood that the drawings only show some embodiments of the present disclosure, and thus should not be regarded as limitation to the scope. Those ordinary skilled in the art could also obtain other relevant drawings based on these drawings without using any inventive efforts.
FIG. 1 is a schematic flowchart of an intelligent control method for integrated animal feeding and watering provided by embodiments of the present disclosure;
FIG. 2 is a schematic view of parameters of watering-feeding periods and watering periods of an intelligent control method for integrated animal feeding and watering provided by embodiments of the present disclosure;
FIG. 3 is a structural schematic view of an intelligent control apparatus for integrated animal feeding and watering provided by embodiments of the present disclosure;
FIG. 4 is a structural schematic view of an individual watering-feeding means of an intelligent control system for integrated animal feeding and watering provided by embodiments of the present disclosure;
FIG. 5 is a structural schematic view of an individual sensing module of the intelligent control system for integrated animal feeding and watering provided by embodiments of the present disclosure;
FIG. 6 is a structural schematic view of a group watering-feeding means of the intelligent control system for integrated animal feeding and watering provided by embodiments of the present disclosure;
FIG. 7 is a structural schematic view of a group sensing module of the intelligent control system for integrated animal feeding and watering provided by embodiments of the present disclosure; and
FIG. 8 is a structural schematic view of an electronic device provided by embodiments of the present disclosure.

### DETAILED DESCRIPTION OF EMBODIMENTS

Technical solutions in embodiments of the present disclosure will be described below in conjunction with drawings in the embodiments of the present disclosure.

It should be noted that like reference signs and letters represent like items in the following drawings, and thus, once a certain item is defined in one drawing, it is unnecessary to further define and explain the same in subsequent drawings. Moreover, in the description of the present disclosure, the terms such as "first" and "second" are merely used for distinguishing the description, but should not be construed as indicating or implying importance in the relativity.

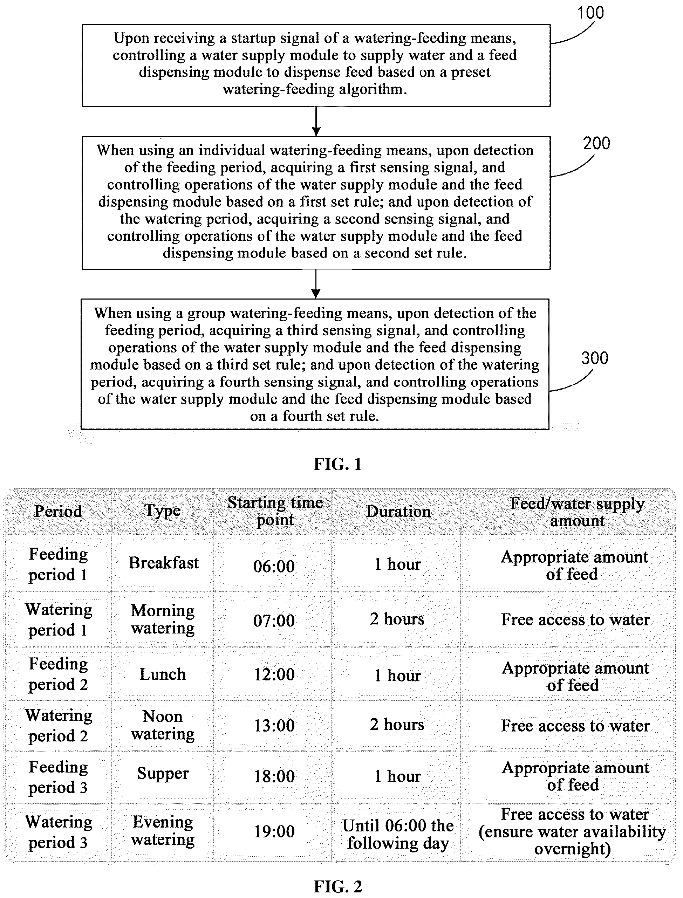

Referring to FIG. 1, FIG. 1 is a schematic flowchart of an intelligent control method for integrated animal feeding and watering provided by embodiments of the present disclosure. The intelligent control method for integrated animal feeding and watering includes:
100, upon receiving a startup signal of a watering-feeding means, controlling a water supply module to supply water and a feed dispensing module to dispense feed based on a preset watering-feeding algorithm.

Optionally, a control module of the watering-feeding means first receives the startup signal from an external or internal trigger source. Optionally, this signal may be from a button, a sensor (such as a time sensor and an animal activity sensor), a remote control module or other types of triggers; the preset watering-feeding algorithm is loaded, where the watering-feeding algorithm includes parameters such as time, amount, and speed of supplying water, as well as type, amount and time of dispensing feed; and based on the watering-feeding algorithm, the control module sends an instruction to the water supply module to control it to start a water supply operation, and sends an instruction to the feed dispensing module to control it to start a feed dispensing operation.

Herein, in an entire watering-feeding process, the control module continuously monitors operational statuses of the water supply module and the feed dispensing module, as well as actual supplied water amount and dispensed feed amount. If any deviation or abnormality is found, relevant parameters can be adjusted, so as to ensure that the watering-feeding process can proceed smoothly.

110, upon receiving the startup signal of the watering-feeding means, setting a set duration as one watering-feeding cycle, where the watering-feeding cycle includes several feeding periods and several watering periods.

120, setting a starting time point of each watering-feeding period and each watering period.

It can be understood that a detailed breeding plan is made according to factors such as animal species, breeding standards, activity habits and breeding environments; and the starting time point, duration and feed and water supply amounts of each feeding-watering period and each watering period are set in the breeding plan.

It should be noted that specific durations of the watering-feeding period and the watering period are set according to requirements, and the durations of the two may be the same or different.

By way of example, with reference to FIG. 2, the starting time points, durations and feed/water supply amounts of the watering-feeding periods and the watering periods are listed.

130, upon detection of the watering-feeding period, controlling the water supply module and the feed dispensing module to operate.

Optionally, the detection of the watering-feeding period and the watering period can be implemented through a built-in clock module or by receiving a signal from an external time server.

140, upon detection of the watering period, controlling the water supply module to perform control.

Optionally, after the step of setting a set duration as one watering-feeding cycle, the method further includes: setting the watering-feeding periods and the watering periods alternately; or setting two watering periods between any two watering-feeding periods. It can be understood that the watering-feeding periods and the watering periods can also be set to other forms according to specific needs.

Exemplarily, when the watering-feeding means is activated, the watering-feeding algorithm built in the control module starts to run, so as to fulfill daily feeding and watering needs of animals. 24 hours per day is taken as one watering-feeding cycle (expressed by T24), each day consists of several feeding periods (expressed by TWN) and watering periods (expressed by TYN), where in the feeding periods, both water and feed are supplied, and in the watering periods, only water is supplied.

T24 can be expressed as:
T24=TW1+TY1+TW3...+TWN+TW2+TY2+TY3...+TYN, where the starting time point of each period is set in the algorithm.

200, when using an individual watering-feeding means, upon detection of the feeding period, acquiring a first sensing signal, and controlling operations of the water supply module and the feed dispensing module based on a first set rule; and upon detection of the watering period, acquiring a second sensing signal, and controlling operations of the water supply module and the feed dispensing module based on a second set rule.

210, when using the individual watering-feeding means, upon detection of the feeding period, acquiring resistance signals of a first grounding sensor and a first height sensor.

It can be understood that when the individual watering-feeding means is used, if it is detected that currently the feeding period is active, a series of operations are taken to ensure accurate dispensing of the feed and safe operation of the apparatus.

Specifically, when the individual watering-feeding means is used for feeding, a status of the apparatus and a remaining amount of the feed are monitored according to the resistance signals of the first grounding sensor and the first height sensor. These signals provide key operation data for the apparatus, and ensure accuracy and safety of the feeding operation.

220, controlling, if resistance variation of the first grounding sensor and the first height sensor reaches a first set threshold, both the water supply module and the feed dispensing module to stop operation.

Specifically, if the sensors detect an abnormal signal, that is, the resistance variation of the first grounding sensor and the first height sensor reaches the first set threshold, it is indicated that the water supplied and the feed dispensed reach a set range, and a measure is taken in time, so as to control both the water supply module and the feed dispensing module to stop operation.

230, upon detection of the watering period, acquiring resistance signals of the first grounding sensor and a second height sensor.

Specifically, when the individual watering-feeding means is used for supplying water, a status of the apparatus and a remaining amount of water are monitored according to the resistance signals of the first grounding sensor and the second height sensor. These signals provide key operation data for the apparatus, and ensure accuracy and safety of the water supplying operation.

240, controlling, if resistance variation of the first grounding sensor and the second height sensor reaches a second set threshold, the water supply module to stop operation.

Specifically, if the sensors detect an abnormal signal, that is, the resistance variation of the first grounding sensor and the second height sensor reaches the second set threshold, it is indicated that the water supplied reaches a set range, and a measure is taken in time, so as to control the water supply module to stop operation.

Thus, intelligent switching control of feeding and watering of the individual watering-feeding means is realized based on the algorithm, thus reducing wastes of the feed and water.

300, when using a group watering-feeding means, upon detection of the feeding period, acquiring a third sensing signal, and controlling operations of the water supply module and the feed dispensing module based on a third set rule; and upon detection of the watering period, acquiring a fourth sensing signal, and controlling operations of the water supply module and the feed dispensing module based on a fourth set rule.

310, when using the group watering-feeding means, upon detection of the feeding period, acquiring resistance signals of a second grounding sensor, a third grounding sensor, a third height sensor and a fourth height sensor.

320, controlling, if resistance variation of the second grounding sensor and the third height sensor reaches a third set threshold, or if resistance variation of the third grounding sensor and the fourth height sensor reaches the third set threshold, both the water supply module and the feed dispensing module to stop operation.

It should be noted that two sets of sensors are provided to detect a feeding condition of the group watering-feeding means, so as to ensure detection accuracy. If the resistance variation of the second grounding sensor and the third height sensor reaches the third set threshold, or if the resistance variation of the third grounding sensor and the fourth height sensor reaches the third set threshold, it is indicated that the water supplied and the feed dispensed reach a set range, and the water supply module and the feed dispensing module are both controlled to stop operation.

330, upon detection of the watering period, acquiring resistance signals of the second grounding sensor, the third grounding sensor, a fifth height sensor and a sixth height sensor.

340, controlling, if resistance variation of the second grounding sensor and the fifth height sensor reaches a fourth set threshold, or if resistance variation of the third grounding sensor and the sixth height sensor reaches a fourth set threshold, the water supply module to stop operation.

It should be noted that two sets of sensors are provided to detect a water supplying condition of the group watering-feeding means, so as to ensure detection accuracy. If the resistance variation of the second grounding sensor and the fifth height sensor reaches the fourth set threshold, or if the resistance variation of the third grounding sensor and the sixth height sensor reaches the fourth set threshold, it is indicated that the water supplied reach a set range, and the water supply module is controlled to stop operation.

It can be understood that the set thresholds and the set ranges in the embodiments of the present disclosure are both set according to specific needs, and are not limited in the embodiments of the present disclosure.

Thus, intelligent switching control of feeding and watering of the group watering-feeding means is realized based on the algorithm, thus reducing wastes of the feed and water.

Herein, when all steps in the watering-feeding algorithm are completed, the control module marks that the current water-feeding operation has been completed, and prepares to perform a next operation, which may include operations such as resetting relevant parameters, cleaning the apparatus, and updating a log.

If any fault or abnormal condition is encountered in the watering-feeding process, the control module needs to timely find and handle the same, including halting a current operation, sending an alarm signal, recording error information, and other operations, so as to ensure safety and reliability of the apparatus.

In the above, in the embodiments of the present disclosure, upon receiving the startup signal of the watering-feeding means, the water supply module is controlled to supply water and the feed dispensing module is controlled to dispense the feed based on the preset watering-feeding algorithm; when the individual watering-feeding means is used, upon detection of the feeding period, operations of the water supply module and the feed dispensing module are controlled based on the first set rule, and upon detection of the watering period, operations of the water supply module and the feed dispensing module are controlled based on the second set rule; when the group watering-feeding means is used, upon detection of the feeding period, operations of the water supply module and the feed dispensing module are controlled based on the third set rule, and upon detection of the watering period, operations of the water supply module and the feed dispensing module are controlled based on the fourth set rule, thus realizing integrated feeding and watering, and realizing intelligent switching between the feeding and the watering based on the algorithm relying on the sensing signals, thereby not only reducing costs of construction, operation and maintenance of the farm, but also reducing wastes of the feed and water.

The above steps are not executed strictly in sequence according to the order described by the numbers, and they should be understood as an integral solution.

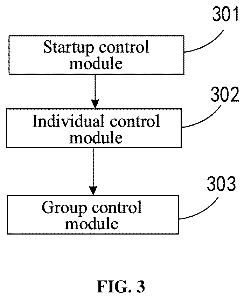

In the second aspect, based on the above embodiments, FIG. 3 is a structural schematic view of an intelligent control apparatus for integrated animal feeding and watering provided by embodiments of the present disclosure. Referring to FIG. 3, the intelligent control apparatus for integrated animal feeding and watering according to the present embodiment specifically includes: a startup control module 301, an individual control module 302 and a group control module 303.

Herein, the startup control module 301 is configured to, upon receiving a startup signal of a watering-feeding means, control a water supply module to supply water and a feed dispensing module to dispense feed based on a preset watering-feeding algorithm; the individual control module 302 is configured to, when using an individual watering-feeding means, upon detection of a feeding period, acquire a first sensing signal, and control operations of the water supply module and the feed dispensing module based on a first set rule, and upon detection of a watering period, acquire a second sensing signal, and control operations of the water supply module and the feed dispensing module based on a second set rule; and the group control module 303 is configured to, when using a group watering-feeding means, upon detection of the feeding period, acquire a third sensing signal, and control operations of the water supply module and the feed dispensing module based on a third set rule; and upon detection of the watering period, acquire a fourth sensing signal, and control operations of the water supply module and the feed dispensing module based on a fourth set rule.

In the above, in the embodiments of the present disclosure, upon receiving the startup signal of the watering-feeding means, the water supply module is controlled to supply water and the feed dispensing module is controlled to dispense the feed based on the preset watering-feeding algorithm; when the individual watering-feeding means is used, upon detection of the feeding period, operations of the water supply module and the feed dispensing module are controlled based on the first set rule, and upon detection of the watering period, operations of the water supply module and the feed dispensing module are controlled based on the second set rule; when the group watering-feeding means is used, upon detection of the feeding period, operations of the water supply module and the feed dispensing module are controlled based on the third set rule, and upon detection of the watering period, operations of the water supply module and the feed dispensing module are controlled based on the fourth set rule, thus realizing integrated feeding and watering, and realizing intelligent switching between the feeding and the watering based on the algorithm relying on the sensing signals, thereby not only reducing costs of construction, operation and maintenance of the farm, but also reducing wastes of the feed and water.

The intelligent control apparatus for integrated animal feeding and watering provided in the embodiments of the present disclosure can be configured to execute the intelligent control method for integrated animal feeding and watering provided in the above embodiments, and has corresponding functions and beneficial effects.

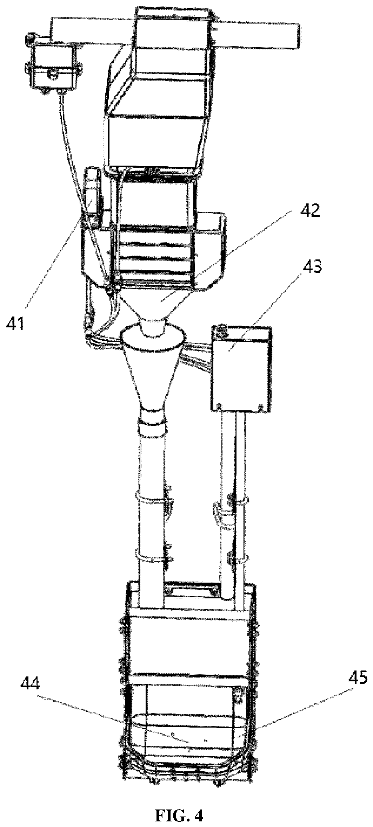

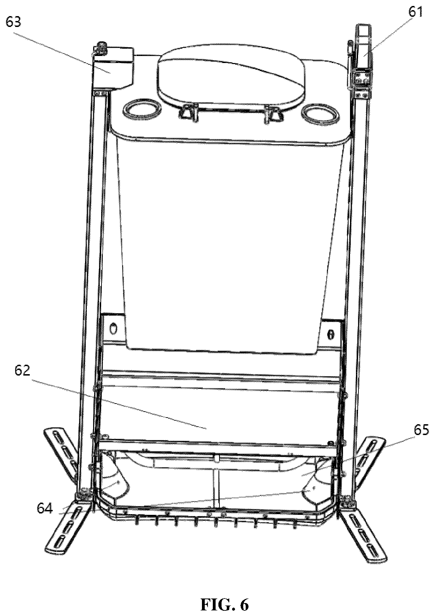

In the third aspect, on the basis of the above embodiments, with reference to FIGs. 4-7, an intelligent control system for integrated animal feeding and watering provided by the present embodiment includes: a cloud service platform, an individual watering-feeding means 40 and a group watering-feeding means 60, where the cloud service platform includes the above intelligent control apparatus for integrated animal feeding and watering; the individual watering-feeding means includes an individual control module 41, an individual feed dispensing module 42, an individual water supply module 43, an individual sensing module 44 and an individual plastic trough 45; and the group watering-feeding means includes a group control module 61, a group feed dispensing module 62, a group water supply module 63, a group sensing module 64 and a group plastic trough 65, where the cloud service platform is connected to the individual control module and the group control module.

Herein, the individual feed dispensing module and the individual water supply module are respectively connected to the individual control module, the individual feed dispensing module and the individual water supply module are respectively connected to the individual plastic trough, and the individual sensing module is provided on the individual plastic trough; and the group feed dispensing module and the group water supply module are respectively connected to the group control module, the group feed dispensing module and the group water supply module are respectively connected to the group plastic trough, and the group sensing module is provided on the group plastic trough.

Optionally, the cloud service platform consists of two parts: a database and management software, where both the database and the management software are deployed in a cloud, thus realizing remote access and sharing of data, and facilitating multi-location and multi-user collaboration. The database is configured to sort and store edited the watering-feeding algorithm meeting different environmental conditions, and issuing the watering-feeding algorithm and the like to a control part as needed. The management software is configured for man-machine interaction, editing the watering-feeding algorithm, querying data, etc.

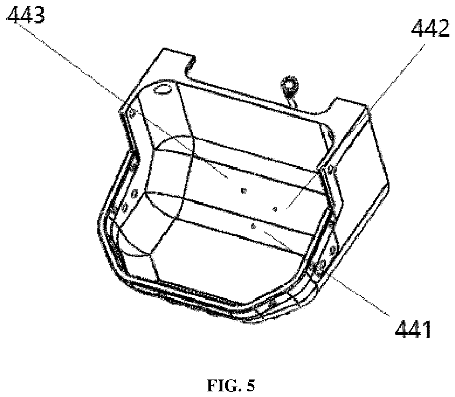

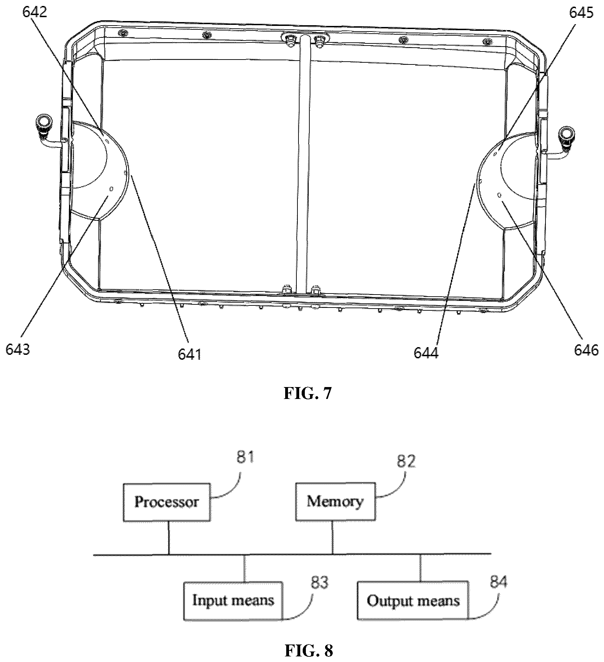

In some embodiments, referring to FIG. 5, the individual sensing module includes a first grounding sensor 441, a first height sensor 442 and a second height sensor 443, where the first height sensor is provided in a position lower than a position where the second height sensor is provided. Referring to FIG. 7, the group sensing module includes a first sensor set and a second sensor set, where the first sensor set includes a second grounding sensor 641, a third height sensor 642, and a fourth height sensor 643; and the second sensor set includes a second grounding sensor 644, a fifth height sensor 645 and a sixth height sensor 646, where the third height sensor is provided in a position lower than a position where the fourth height sensor is provided, and the fifth height sensor is provided in a position lower than a position where the sixth height sensor is provided.

It should be noted that the individual control module is connected to the cloud service platform, and is configured to process a signal of the individual sensing module and then transmit the processed signal to the cloud service platform; and the group control module is connected to the cloud service platform, and is configured to process the signal of the group sensing module and then transmit the processed signal to the cloud service platform.

It should be noted that the individual watering-feeding plastic trough is provided therein with a set of sensors, consisting of one common grounding sensor DG and two detection sensors at different positions and heights, where a first height sensor DC1 is a low-level height sensor, and a second height sensor DC2 is a high-level height sensor.

The group watering-feeding plastic trough is provided therein with two sets of sensors, and each set consists of one common grounding sensor (a second grounding sensor QG1 and a third grounding sensor QG2) and two detection sensors at different positions and heights, where a third height sensor QC1 is a low-level height sensor, a fourth height sensor QC2 is a high-level height sensor, a fifth height sensor QC3 is a low-level height sensor, and a sixth height sensor QC4 is a high-level height sensor.

In the fourth aspect, embodiments of the present disclosure further provide an electronic device, which can integrate the intelligent control apparatus for integrated animal feeding and watering provided by the embodiments of the present disclosure. FIG. 8 is a structural schematic view of the electronic device provided by embodiments of the present disclosure. Referring to FIG. 8, the electronic device includes: an input means 83, an output means 84, a memory 82, and one or more processors 81, where the memory 82 is configured to store one or more programs; when the one or more programs are executed by the one or more processors 81, the one or more processors 81 implement the intelligent control method for integrated animal feeding and watering provided by the above embodiments. Herein, the input means 83, the output means 84, the memory 82 and the one or more processors 81 can be connected by an internal bus or in other manners, and connection by an internal bus is taken as an example in FIG. 8.

The one or more processors 81 execute various functional applications and data processing of the device by running software programs, instructions and modules stored in the memory 82, so as to realize the above intelligent control method for integrated animal feeding and watering.

The electronic device provided in the above can be used for executing the intelligent control method for integrated animal feeding and watering provided by the above embodiments, and has corresponding functions and beneficial effects.

In the fifth aspect, embodiments of the present disclosure further provide a computer-readable storage medium, where the computer-readable storage medium includes computer programs stored, where when the computer programs run, the device where the computer-readable storage medium is located is controlled to execute the above intelligent control method for integrated animal feeding and watering, and can achieve the same beneficial effects.

Certainly, for the storage medium including computer-executable instructions provided by the embodiments of the present disclosure, the computer-executable instructions thereof are not limited to the above intelligent control method for integrated animal feeding and watering, and relevant operations in the intelligent control method for integrated animal feeding and watering provided by any embodiment of the present disclosure can also be executed.

In the sixth aspect, embodiments of the present disclosure further provide a computer program product, and the method according to various embodiments of the present disclosure can be completely or partially implemented by software, hardware, firmware or any combination thereof. When using software for implementation, it may be completely or partially implemented in the form of a computer program product. The computer program product includes one or more computer programs or instructions. When the one or more computer programs or instructions are loaded and executed on a computer, procedures or functions in various embodiments of the present disclosure are completely or partially implemented. The computer may be a general-purpose computer, a special-purpose computer, a computer network, a network device, a user device, a core network device, OAM (Open Application Model) or other programmable apparatuses.

The computer programs or instructions can be stored in a computer-readable storage medium or can be transmitted from one computer-readable storage medium to another computer-readable storage medium. For example, the computer programs or instructions can be transmitted from one website, computer, server or data center to another website, computer, server or data center in a wired or wireless manner. The computer-readable storage medium can be any usable medium accessible by a computer, or a data storage device, such as a server or a data center, integrating one or more usable media. The usable media may be magnetic media, such as floppy disk, hard disk, and magnetic tape, or optical media, such as digital video disk, or semiconductor media, such as solid state disk. The computer-readable storage medium may be a volatile or non-volatile storage medium, or may include both volatile and non-volatile types of storage media.

In the several embodiments provided in the present disclosure, it should be understood that the apparatus and the method disclosed also may be implemented in other manners. The apparatus embodiments described in the above are merely illustrative. For example, flowcharts and block diagrams in the drawings show system structures, functions and operations that can be implemented in the apparatus, method and computer program product according to multiple embodiments of the present disclosure. In this regard, each block in the flowcharts or the block diagrams may represent a part of a module, a program segment or a code, which contains one or more executable instructions configured to realize a specified logical function. It also should be noted that in some implementation modes as substitutions, the functions marked in blocks also can take effect in an order different than that marked in the drawings. For example, two consecutive blocks substantially can be concurrently executed, or they sometimes can be executed in a reverse order, which depends upon the functions involved. It is also noted that each block of the block diagrams and/or flowcharts, and combinations of blocks in the block diagrams and/or flowcharts, can be implemented in dedicated hardware-based systems that perform the specified functions or actions, or can be implemented in a combination of dedicated hardware and computer instructions.

Besides, various functional modules in various embodiments of the present disclosure can be integrated together to form one independent part, the various modules can also exist independently, or two or more modules can be integrated to form one independent part.

If the function is realized in a form of software functional module and is sold or used as an individual product, it can be stored in one computer-readable storage medium. Based on such understanding, the technical solutions of the present disclosure in essence or parts making contribution to the prior art or parts of the technical solutions can be embodied in form of a software product, and this computer software product is stored in a storage medium, including several instructions for making an electronic device (which may be a personal computer, a server or a network device, etc.) execute all or part of the steps of the method of the embodiments of the present disclosure. The preceding storage medium includes various media in which program codes can be stored, such as a USB flash disk, a mobile hard disk, a read-only memory (ROM), a random access memory (RAM), a diskette and a compact disk.

The above-mentioned are only for embodiments of the present disclosure, and are not intended to limit the scope of protection of the present disclosure. Various modifications and changes could be made to the present disclosure by those skilled in the art. Any modifications, equivalent substitutions, improvements and so on made within the spirit and principle of the present disclosure should be covered within the scope of protection of the present disclosure. It should be noted that like reference signs and letters represent like items in the following drawings, and thus, once a certain item is defined in one drawing, it is unnecessary to further define and explain the same in subsequent drawings.

The above-mentioned are merely for specific embodiments of the present disclosure, but the scope of protection of the present disclosure is not limited thereto, and any variation or substitution that would be readily conceivable to those skilled in the art within the technical scope disclosed in the present disclosure should fall within the scope of protection of the present disclosure. Therefore, the scope of protection of the present disclosure should be determined by the scope of protection of the claims.

It should be indicated that in the embodiments of the present disclosure, relational terms such as first and second are merely used for distinguishing one entity or operation from another entity or operation, while it is not required or implied that these entities or operations necessarily have any such practical relation or order. Moreover, the terms such as "comprise", "contain" or any other variants thereof are intended to encompass non-exclusive inclusion, such that a process, a method, an article or a device including a series of elements includes not only those elements, but also includes other elements that are not explicitly listed, or further includes elements inherent in such a process, method, article or device. Without further limitations, an element defined by the phrase "comprising a..." does not exclude the presence of additional identical elements in the process, method, article or device that includes the specified element.

## Claims

1. An intelligent control method for integrated animal feeding and watering, **characterized by** comprising steps of:
upon receiving a startup signal of a watering-feeding means, controlling a water supply module to supply water and a feed dispensing module to dispense feed, based on a preset watering-feeding algorithm;
when using an individual watering-feeding means, upon detection of a feeding period, acquiring a first sensing signal, and controlling operations of the water supply module and the feed dispensing module based on a first set rule; and upon detection of a watering period, acquiring a second sensing signal, and controlling operations of the water supply module and the feed dispensing module based on a second set rule; and
when using a group watering-feeding means, upon detection of the feeding period, acquiring a third sensing signal, and controlling operations of the water supply module and the feed dispensing module based on a third set rule; and upon detection of the watering period, acquiring a fourth sensing signal, and controlling operations of the water supply module and the feed dispensing module based on a fourth set rule.

2. The intelligent control method for integrated animal feeding and watering according to claim 1, wherein the step of upon receiving a startup signal of a watering-feeding means, controlling a water supply module to supply water and a feed dispensing module to dispense feed, based on a preset watering-feeding algorithm, comprises:
upon receiving the startup signal of the watering-feeding means, setting a set duration as one watering-feeding cycle, wherein the watering-feeding cycle comprises several feeding periods and several watering periods;
setting a starting time point of each of the watering-feeding periods and each of the watering periods;
upon detection of the watering-feeding period, controlling the water supply module and the feed dispensing module to operate; and
upon detection of the watering period, controlling the water supply module to perform control.

3. The intelligent control method for integrated animal feeding and watering according to claim 2, after the step of setting a set duration as one watering-feeding cycle, further comprising:
setting the watering-feeding periods and the watering periods alternately; or
setting two watering periods between any two watering-feeding periods.

4. The intelligent control method for integrated animal feeding and watering according to claim 1, wherein the step of when using an individual watering-feeding means, upon detection of a feeding period, acquiring a first sensing signal, and controlling operations of the water supply module and the feed dispensing module based on a first set rule; and upon detection of a watering period, acquiring a second sensing signal, and controlling operations of the water supply module and the feed dispensing module based on a second set rule, comprises:
when using the individual watering-feeding means, upon detection of the feeding period, acquiring resistance signals of a first grounding sensor and a first height sensor;
controlling, if resistance variation of the first grounding sensor and the first height sensor reaches a first set threshold, both the water supply module and the feed dispensing module to stop operation;
upon detection of the watering period, acquiring resistance signals of the first grounding sensor and a second height sensor; and
controlling, if resistance variation of the first grounding sensor and the second height sensor reaches a second set threshold, the water supply module to stop operation.

5. The intelligent control method for integrated animal feeding and watering according to claim 1, wherein the step of when using a group watering-feeding means, upon detection of the feeding period, acquiring a third sensing signal, and controlling operations of the water supply module and the feed dispensing module based on a third set rule; and upon detection of the watering period, acquiring a fourth sensing signal, and controlling operations of the water supply module and the feed dispensing module based on a fourth set rule, comprises:
when using the group watering-feeding means, upon detection of the feeding period, acquiring resistance signals of a second grounding sensor, a third grounding sensor, a third height sensor and a fourth height sensor;
controlling, if resistance variation of the second grounding sensor and the third height sensor reaches a third set threshold, or if resistance variation of the third grounding sensor and the fourth height sensor reaches the third set threshold, both the water supply module and the feed dispensing module to stop operation;
upon detection of the watering period, acquiring resistance signals of the second grounding sensor, the third grounding sensor, a fifth height sensor and a sixth height sensor; and
controlling, if resistance variation of the second grounding sensor and the fifth height sensor reaches a fourth set threshold, or if resistance variation of the third grounding sensor and the sixth height sensor reaches a fourth set threshold, the water supply module to stop operation.

6. An intelligent control apparatus for integrated animal feeding and watering, **characterized by** comprising:
a startup control module, configured to, upon receiving a startup signal of a watering-feeding means, control a water supply module to supply water and a feed dispensing module to dispense feed, based on a preset watering-feeding algorithm;
an individual control module, configured to, when using an individual watering-feeding means, upon detection of a feeding period, acquire a first sensing signal, and control operations of the water supply module and the feed dispensing module based on a first set rule, and upon detection of a watering period, acquire a second sensing signal, and control operations of the water supply module and the feed dispensing module based on a second set rule; and
a group control module, configured to, when using a group watering-feeding means, upon detection of the feeding period, acquire a third sensing signal, and control operations of the water supply module and the feed dispensing module based on a third set rule; and upon detection of the watering period, acquire a fourth sensing signal, and control operations of the water supply module and the feed dispensing module based on a fourth set rule.

7. An intelligent control system for integrated animal feeding and watering, **characterized by** comprising: a cloud service platform, an individual watering-feeding means (40) and a group watering-feeding means (60), wherein the cloud service platform comprises the intelligent control apparatus for integrated animal feeding and watering according to claim 6; the individual watering-feeding means comprises an individual control module (41), an individual feed dispensing module (42), an individual water supply module (43), an individual sensing module (44) and an individual plastic trough (45); and the group watering-feeding means comprises a group control module (61), a group feed dispensing module (62), a group water supply module (63), a group sensing module (64) and a group plastic trough (65), wherein the cloud service platform is connected to the individual control module and the group control module;
the individual feed dispensing module (42) and the individual water supply module (43) are respectively connected to the individual control module (41), the individual feed dispensing module (42) and the individual water supply module (43) are respectively connected to the individual plastic trough (45), and the individual sensing module (44) is provided on the individual plastic trough (45); and
the group feed dispensing module (62) and the group water supply module (63) are respectively connected to the group control module (61), the group feed dispensing module (62) and the group water supply module (63) are respectively connected to the group plastic trough (65), and the group sensing module (64) is provided on the group plastic trough (65).

8. The intelligent control system for integrated animal feeding and watering according to claim 7, wherein the individual sensing module comprises a first grounding sensor (441), a first height sensor (442) and a second height sensor (443), wherein the first height sensor is provided in a position lower than a position where the second height sensor is provided; and
the group sensing module comprises a first sensor set and a second sensor set, wherein the first sensor set comprises a second grounding sensor (641), a third height sensor (642), and a fourth height sensor (643); and the second sensor set comprises a second grounding sensor (644), a fifth height sensor (645) and a sixth height sensor (646), wherein the third height sensor is provided in a position lower than a position where the fourth height sensor is provided, and the fifth height sensor is provided in a position lower than a position where the sixth height sensor is provided.

9. An electronic device, **characterized by** comprising:
a processor (81), a memory (82) and an internal bus, wherein the processor is connected to the memory through the internal bus, the memory stores computer-readable instructions, and the computer-readable instructions are configured to, when executed by the processor, implement the intelligent control method for integrated animal feeding and watering according to any one of claims 1-5.

10. A computer-readable storage medium, **characterized by** storing a computer program, wherein the computer program, when executed by a server, implements the intelligent control method for integrated animal feeding and watering according to any one of claims 1-5.
